# EUROPEAN PATENT APPLICATION

(11) **EP 1 526 540 A1**
(43) Date of publication of application: **27.04.2005**
(21) Application number: 04021834.9
(22) Date of filing: 14.09.2004
(51) Int. Cl.: G11B 27/11

(54) **Apparatus and method for searching playback start positions in a VCR**

(30) Priority: 22.10.2003 KR 2003073600
(71) Applicant: Daewoo Electronics Corporation, Seoul (KR)
(72) Inventor: Kim, Min Chul Daewoo Electronics Corporation, Seoul (KR); Yoo, Chang Mo Daewoo Electronics Corporation, Seoul (KR)
(74) Representative: Turi, Michael, Dipl.-Phys.

(57) **Abstract**

In a Video Cassette Recorder (VCR) system capable of receiving broadcast signals, the still images extracted from the broadcast signals are stored in a memory area at regular intervals when the broadcast signals are recorded on a videotape. When a user requests a search for a wanted playback start position, a snapshot set screen on which the still images stored at regular intervals are arranged in an N × N or an N × M matrix form is provided to a display unit. When the user selects a specific snapshot image among the snapshot images on the snapshot set screen as a jump position, a playback mode is automatically performed by jumping to the jump position. Accordingly, the wanted playback start position can be searched for and a playback operation is performed from the wanted playback start position conveniently and speedily.

## Description

The present invention relates to a video cassette recorder system; and more particularly, to an apparatus and a method for searching for playback start positions, included in a video cassette recorder system, to thereby replay recorded broadcast signals from the playback start positions, conveniently.

As well known to those skilled in the art, Video Cassette Recorder (VCR) systems generally adopt a Video Home System Index Search System (VISS) function. That is, a plurality of VISS signals are recorded on a videotape in the course of recording broadcast signals on the videotapes. Therefore, desired playback start positions on the videotape can be searched conveniently by the help of the recorded VISS signal during playback.

However, in order to record the VISS signals on the videotape, a mode of a VCR system should be set to a stop mode through user manipulations, and after VISS signals are recorded, the mode of the VCR system should be changed to a playback mode. Therefore, there is a problem in that a series of the user manipulations are very inconvenient.

Furthermore, the desired VISS signals recorded on the videotape are searched for by pressing index (VISS) buttons and then the mode of the VCR system should be returned to the playback mode through user manipulation, so that there is also a problem in that the user manipulations are inconvenient.

It is, therefore, an object of the present invention to provide an apparatus and a method for searching for playback start positions, to thereby replay broadcast signals recorded on a videotape from a wanted playback start position, automatically, in a VCR system having a built-in digital tuner for receiving broadcast signals.

It is, therefore, another object of the present invention to provide an apparatus and a method for searching for playback start positions at high speed by using still images, in a VCR system having a built-in digital tuner for receiving broadcast signals.

In accordance with one aspect of the present invention, there is provided an apparatus for replaying broadcast signals, which are recorded on a videotape, from a wanted playback start position selected by a user, included in a Video Cassette Recorder (VCR) system, including: means for storing snapshot images, generated by extracting still images from the broadcast signals at predetermined intervals, when the broadcast signals are recorded on the videotape, and retrieving the stored snapshot images to construct a snapshot set screen by arranging the retrieved snapshot images in an N × N or an N × M matrix form and providing the snapshot set screen to a display unit, when a detection of the wanted playback start position is requested; means for comparing playback signals generated by replaying the broadcast signals recorded on the videotape with a specific snapshot image, which is corresponding to the wanted playback start position, to thereby detect a section of the playback signals corresponding to the specific snapshot image, in case the specific snapshot image is selected among the snapshot images on the snapshot set screen which is provided to the display unit; and means for replaying the broadcast signals recorded on the videotape from the detected section, wherein the N and the M denote natural numbers.

In accordance with another aspect of the present invention, there is provided an apparatus for replaying broadcast signals, which are recorded on a videotape, from a wanted playback start position selected by a user, included in a VCR system, including: means for generating snapshot images by extracting still images from the broadcast signals at predetermined intervals when the broadcast signals are recorded on the videotape, and then for storing the snapshot images; means for retrieving the stored snapshot images to construct a snapshot set screen by arranging the retrieved snapshot images in an N × N or an N × M matrix form and providing the snapshot set screen to a display unit, when a detection of the wanted playback start position is requested; means for commanding a high-speed rewind mode or a high-speed playback mode of the broadcast signals recorded on the videotape to generate high-speed playback broadcast signals, in case the broadcast signals are required to be replayed from a specific snapshot image by selecting the specific snapshot image among the snapshot images on the snapshot set screen which is provided to the display unit; means for comparing the high-speed playback broadcast signals with the specific snapshot image, to thereby detect a section of the high-speed playback broadcast signals corresponding to the specific snapshot image; and means for replaying the broadcast signals recorded on the videotape from the detected section; wherein the N and the M denote natural numbers.

In accordance with a further aspect of the present invention, there is provided a method of replaying broadcast signals, which are recorded on a videotape, from a wanted playback start position selected by a user, included in a VCR system, including the steps of: storing snapshot images, generated by extracting still images from the broadcast signals at predetermined intervals, when the broadcast signals are recorded on the videotape; retrieving the stored snapshot images to construct a snapshot set screen by arranging the retrieved snapshot images in an NxN or an NxM matrix form and providing the snapshot set screen to a display unit, when a detection of the wanted playback start position is required; selecting a specific snapshot image, which is corresponding to the wanted playback start position among the snapshot images on the snapshot set screen which is provided to the display unit; comparing playback signals generated by replaying the broadcast signals recorded on the videotape with the specific snapshot image, to thereby detect a section of the playback signals corresponding to the specific snapshot image; and replaying the broadcast signals recorded on the videotape from the detected section; wherein the N and the M denote natural numbers.

The above and other objects and features of the present invention will become apparent from the following description of preferred embodiments given in conjunction with the accompanying drawings, in which:
Fig. 1 is a block diagram showing a VCR system in which an apparatus for searching for playback start positions is mounted, in accordance with the present invention;
Fig. 2 is a flowchart showing a process of storing snapshot images at the time of performing a recording mode, in order to search for playback start positions in accordance with the present invention; and
Fig. 3 is a flowchart showing a process of searching for a desired playback start position by using the snapshot images stored during the recording mode in accordance with the present invention.

Preferred embodiments of the present invention will now be described in detail with reference to the accompanying drawings.

Unlike a conventional method in which VISS signals are recorded on a videotape and then desired playback start positions are searched for by using the VISS signals, in accordance with the present invention, a plurality of snapshot images, i.e., still images of broadcast signals which are being recorded on a videotape, are stored in a memory area at regular intervals in the course of recording the broadcast signals on the videotape, and then, when a user requests a search for a wanted playback start position, (a request for a snapshot), a snapshot set screen, on which the still images stored at regular intervals are arranged in an NxN or an NxM matrix form, is provided to a display unit, and then, when a specific snapshot image (or a jump image), which corresponds to the wanted playback start position, on the snapshot set screen is selected by the user to replay the broadcast signals from the wanted playback start position, a playback mode is automatically performed by jumping to the specific snapshot image. In this case, the N and the M denote positive integral numbers, that is, natural numbers.

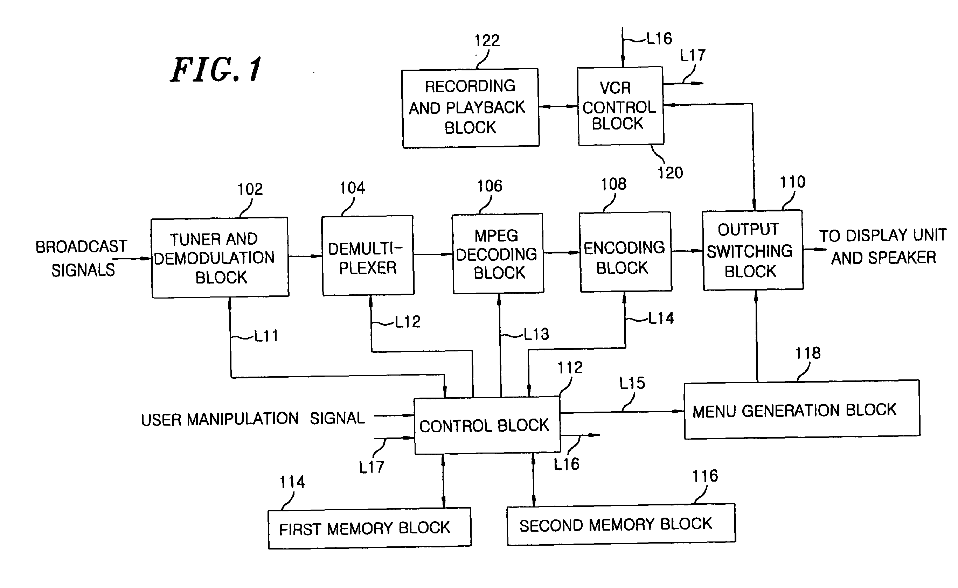

Fig. 1 is a block diagram showing a VCR system including an apparatus for searching for playback start positions in accordance with a preferred embodiment of the present invention. The VCR system having a built-in digital tuner includes a tuner and demodulation block 102, a demultiplexer 104, a Moving Picture Experts Group (MPEG) decoding block 106, an encoding block 108, an output switching block 110, a control block 112, a first memory block 114, a second memory block 116, a menu generation block 118, a VCR control block 120, and a recording and playback block 122.

Referring to FIG. 1, the tuner and demodulation block 102 extracts additional information (that is, channel information packet data, program information packet data, etc.) from data streams received through a cable (not shown). In detail, the tuner and demodulation block 102 extracts (1) channel information packet data that includes Program Allocation Table (PAT) information composed of N-bit Program Identifier (PID) information indicating the program numbers for each broadcast channel, and (2) program information packet data that includes Program Map Table (PMT) information composed of N-bit PID information indicating audio, video and text of a specific channel, N-bit detailed PID information indicating the detailed information on each program, program information of each channel, and the like. Thereafter, the extracted channel information packet data and the extracted program information packet data are provided to the control block 112 (which will be described later) through a line L11 after passing through processes, such as conversion into an intermediate frequency, demodulation, error correction and the like.

At this time, the channel information packet data and the program information packet data provided to the control block 112 through the line L11 are used to tune a specific channel when the specific channel is selected by the user, thus allowing the control block 112 to generate a tuning control signal. Further, the channel information packet data and the program information packet data are used as the contents of a menu screen when the display of a plurality of pieces of channel information and the program information of each channel is requested by the user.

The demultiplexer 104 selects broadcast signals of one cable broadcasting station among demodulated broadcast signals of a plurality of cable broadcasting stations provided from the tuner and the demodulation block 102, on the basis of the tuning control signal provided from the control block 112 through a line L12, and then transmits the selected broadcast signals to the MPEG decoding block 106.

Meanwhile, the MPEG decoding block 106 restores the selected broadcast signals, i.e., compression-coded audio and video signals (the audio and video signals compression-coded in view of time and space correlation), which are provided from the demultiplexer 104, into original signals by adopting decoding techniques, such as variable-length decoding, inverse Discrete Cosine Transform (DCT), inverse quantization, motion compensation and the like, based on a decoding control signal provided by the control block 112 through a line L13. The restored digital video and audio signals are provided to the encoding block 108.

Further, the encoding block 108 converts the digital video and audio signals, provided from the MPEG decoding block 106, into National Television System Committee (NTSC)-or Phase Alternation by Line system (PAL)- type analog video and audio signals on the basis of an encoding control signal provided from the control block 112 through a line L14, and then provides the analog video and audio signals to the output switching block 110.

Furthermore, the encoding block 108 provides the analog broadcast signals to the control block 112 through the line L14 to collect the snapshot images for high-speed searches for playback start positions. In this case, instead of providing the analog broadcast signals to the control block 112, each of the still images can be provided to the control block 112 at predetermined regular intervals, or each of the still images can be provided to the control block 112 whenever the control block 112 requests a transmission of the still images.

Meanwhile, the control block 112, which includes, for example, a microprocessor for controlling the entire operation of the system, etc., generates a tuning control signal corresponding to the channel information packet data and the program information packet data when the channel information packet data and the program information packet data are inputted thereto, and then provides the tuning control signal to the tuner and demodulation block 102 and the demultiplexer 104 through the lines L11 and L12, respectively. Further, the control block 112 sequentially stores the channel information packet data and the program information packet data for each channel in a predetermined area of the first memory block 114.

Furthermore, when a service request signal for a program guide menu is inputted to the control block 112 from the outside, the control block 112 retrieves the channel information packet data and the program information packet data for each channel which have been stored in the predetermined area of the first memory block 114, and then provides the channel information packet data and program information packet data to the menu generation block 118 through a line L15.

Further, when a user manipulation signal for recording the broadcast signals on a videotape or playing a program recorded on the videotape is inputted to the control block 112, the control block 112 generates a recording or playback control signal corresponding to the user manipulation signal, and then transmits the recording or playback control signal to the VCR control block 120 through a line L16.

Furthermore, when the VCR system records the broadcast signals, the control block 112 extracts the still images from the broadcast signals, which are provided from the encoding block 108 through the line L14, at regular intervals (e.g., 30 sec, 1 min, 2 min or 4 min) or directly receives the still images, which are generated in the encoding block 108, through the line L14 at regular intervals, so as to collect the snapshot images for high-speed searches for playback start positions. Thereafter, the control block 112 indexes each of the still images sequentially, and then constructs a snapshot set screen by arranging the indexed still images (the indexed snapshot images) in an N × N or an N × M matrix form, and then stores data of the snapshot set screen in the second memory block 116. In this case, the data of the snapshot set screen are used as index information for searching for the playback start positions chosen by the user.

Furthermore, when a specific snapshot image on the NxN or the NxM matrix-form snapshot set screen is selected for jumping to a wanted playback start position (a jump position) corresponding to the specific snapshot image, the control block 112 commands the VCR control block 120 to perform a high-speed rewind mode or a high-speed playback mode for the search for the playback start position (or the jump position) through the line L16. Accordingly, when high-speed playback broadcast signals, which are replayed in the high-speed rewind mode or the high-speed playback mode, are inputted from the VCR control block 120 to the control block 112 through a line L17, if the high-speed playback broadcast signals corresponding to the specific snapshot image is detected, the control block 112 generates a jump playback command signal for commanding a playback operation from the jump position and then transmits the jump playback command signal to the VCR control block 120 through the line L16. As a result, the VCR control block 120 performs the playback mode from the jump position.

In the meantime, when the service request signal for the program guide menu is inputted, the menu generation block 118 constructs the channel information packet data and the program information packet data for each channel, which are provided from the control block 112 through the line L15, into menu screen data using graphics, and then converts the constructed menu screen data into NTSC or PAL analog signals, and then provides the NTSC or PAL analog signals to the output switching block 110.

Therefore, when the service request signal for the program guide menu is not inputted, the output switching block 110 transmits the analog video and audio signals provided from the encoding block 108 to a display unit and a speaker, and, in case of recording mode, transmits the analog video and audio signals to the VCR control block 120. However, when the service request signal for the program guide menu is inputted, a recording operation is not performed through the line L19, but the video signals transmitted to the display unit are displayed in the form of composite screen data, i.e., the combination of the menu screen data, provided from the menu generation block 118, and the video signals.

The VCR control block 120 includes, for example, a microprocessor, etc., to control the entire operation of the VCR. In case of a recording mode, the VCR control block 120 converts broadcast signals (analog video and audio signals) provided through the output switching block 110 into signals recordable on a videotape and then transmits the recordable signals to the recording and playback block 122. In case of a playback mode, the VCR control block 120 transmits playback signals provided from the recording and playback block 122 to the output switching block 110.

Furthermore, the VCR control block 120 transmits the high-speed playback broadcast signals, which are replayed by performing the high-speed rewind mode or the high-speed playback mode, to the control block 112 through the line L17. Herein, the high-speed playback broadcast signals provided to the control block 112 are used to search for the specific snapshot image, i.e., the wanted playback start position (the jump position) on the N × N or the N × M matrix-form snapshot set screen.

The recording and playback block 122 including a head drum, a deck for accommodating the videotape, etc., performs a function of amplifying the recordable broadcast signals, provided from the VCR control block 120, to a certain level and then recording the amplified broadcast signals on the videotape, in the recording mode, and a function of detecting the playback signals replayed from the videotape and then transmitting the playback signals to the VCR control block 120 in the playback mode, and a function of transmitting the high-speed playback broadcast signals to the VCR control block 120 in the high-speed rewind mode or the high-speed playback mode.

Hereinafter, the method for searching for a playback start position selected by a user is described.

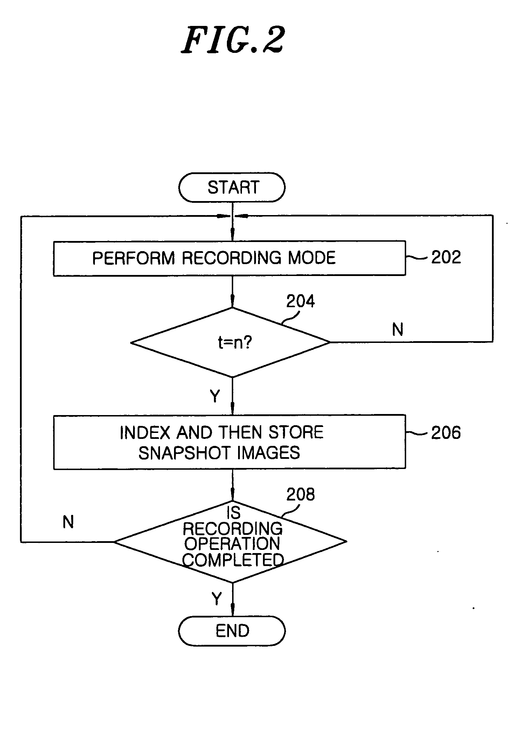

Fig. 2 is a flowchart showing a process of storing snapshot images during a recording operation of a VCR system to search for playback start positions in accordance with the present invention.

Referring to Fig. 2, when broadcast signals are recorded by manipulating, e.g., a remote controller, a recording mode, in which analog broadcast signals generated by tuning, decoding and encoding the broadcast signals sequentially are recorded on a videotape, is performed under the control of the control block 112 (step 202).

During the recording mode, the control block 112 extracts still images at predetermined regular intervals and then indexes each of the still images, to thereby construct an N × N or an N × M matrix-form snapshot set screen, and then stores data of the snapshot set screen in a second memory block 116 (steps 204, 206). The collection of the still images, i.e., snapshot images, is implemented in such a way that the still images are extracted by the control block 112 from the analog broadcast signals provided from the encoding block 108 through the line L14, or the still images generated at the encoding block 108 are provided to the control block 112 through the line L14 at predetermined regular intervals, or the still images generated at the encoding block 108 are provided to the control block 112 through the line L14 whenever the control block 112 requests the still images to the encoding block 108 at predetermined regular intervals.

The above-described processes of extracting and storing the snapshot images are performed until the recording mode ends (step 208), to thereby store the data of the matrix-form snapshot set screen in the second memory block 116.

Hereinafter, processes of searching for playback start positions at high speed using the data of the snapshot set screen stored in the second memory block 116 are described.

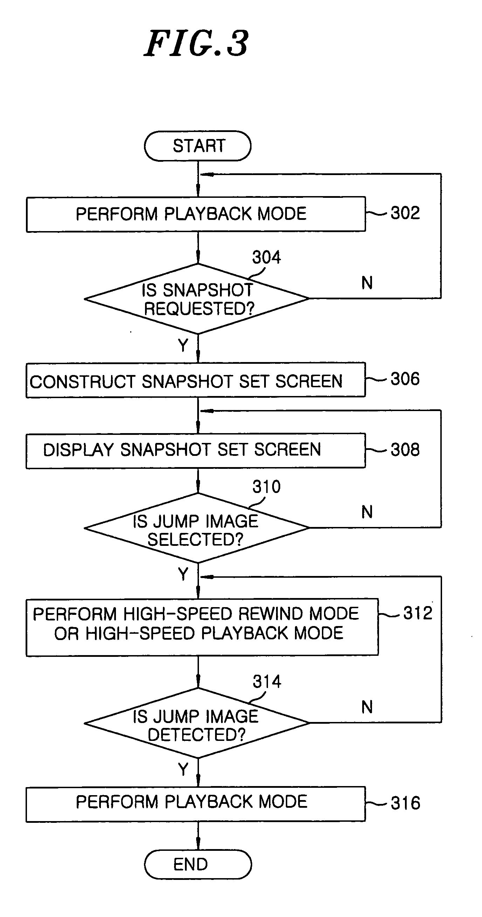

Fig. 3 is a flowchart showing a process of searching for a wanted playback start position by using the snapshot set screen stored during the recording mode, in accordance with the present invention.

First, while replaying broadcast signals recorded on the videotape, the user can select a wanted playback start position from which the recorded broadcast signals can be replayed (step 302). When the user requests snapshots (i.e., requests for a jump to the wanted playback start position) (step 304), the control block 112 retrieves the data of the snapshot set screen stored in the second memory block 116 and provides the data to the menu generation block 118 through the line L15, and then the menu generation block 118 generates the snapshot set screen composed of snapshot images arranged in an N × N or an N × M matrix form and then transmits the snapshot set screen to the output switching block 110 (step 306). In this case, it is possible to request snapshots not only during the playback mode but also during a playback-waiting mode after loading the videotape.

Accordingly, the output switching block 110 generates composite broadcast signals in which playback signals provided from the VCR control block 120 and the data of the snapshot set screen composed of the snapshot images arranged in the N × N or the N × M matrix form are combined together, and then transmits the composite broadcast signals to the display unit. As a result, the composite broadcast signals, which include the snapshot set screen composed of the snapshot images arranged in the NxN or the N×M matrix form, are displayed on the monitor of the display unit (step 308). Herein, the snapshot set screen, which is included in the composite broadcast signals, is preferably constructed in a translucent form to allow the user to watch the broadcast signals being currently replayed.

In this case, it is also possible that the snapshot set screen composed of the snapshot images arranged in the N × N or the N × M matrix form may be provided to the display unit, with the playback signals prevented from being outputted.

Accordingly, the user can search for a specific snapshot image corresponding to the wanted playback start position while scrolling up/down the snapshot set screen displayed on the monitor by a page unit, and then select the specific snapshot image to perform a playback operation from the wanted playback start position (step 310). When the user selects the specific snapshot image (the jump image) from a plurality of the snapshot images on the snapshot set screen to perform the playback operation from the wanted playback start position, the control block 112 commands the VCR control block 120 to perform the high-speed rewind mode or the high-speed playback mode through the line L16. Herein, the high-speed rewind mode or the high-speed playback mode for searching for the specific snapshot image may be set to an option selectable by the user.

As a result, the high-speed rewind mode or high-speed playback mode is performed under the control of the VCR control block 120 (step 312), and the VCR control block 120 transmits high-speed playback broadcast signals, which are replayed from the videotape, to the control block 112 through the line L17.

Thereafter, the control block 112 searches for a section in the high-speed playback broadcast signals, in which the specific snapshot image (the jump image) is positioned, by comparing the high-speed playback broadcast signals provided through the line L17 with the specific snapshot image (the jump image) (step 314). If the section is detected, the control block 112 generates a jump playback signal for commanding a playback operation from the detected section, and then transmits the jump playback command signal to the VCR control block 120 through the line L16. As a result, the VCR control block 120 performs the playback mode while setting the section to be the wanted playback start position (step 316), so that the user can watch the broadcast signals replayed from the wanted playback start position.

Accordingly, users can search for the wanted playback start positions through the above-mentioned snapshot function conveniently and speedily.

Meanwhile, unlike the preferred embodiments of the present invention, in which the snapshot images (the still images) are stored as analog images, the wanted playback start position (the position of the specific snapshot image) is searched for by comparing the specific snapshot image with the analog images replayed from the videotape, and then the playback mode is performed by jumping to the wanted playback start position, it is possible that the snapshot images (the still images) can be stored as first digital images, playback signals replayed from the videotape are converted into second digital images, and then the wanted playback start positions can be searched for by comparing the first and the second digital images. In this case, the snapshot images are provided not from the encoding block but from the MPEG decoding block, and the control block must include a device for converting analog broadcast signals, which are replayed from the videotape, into digital broadcast signals.

As described above, unlike a conventional method in which VISS information is recorded on a videotape and desired positions are searched for by using the VISS information, the present invention is constructed in such a way that snapshot images are stored in a memory area at regular intervals at the time of recording broadcast signals on the videotape, and then a snapshot set screen in which the snapshot images are arranged in an N×N or an NxM matrix form is provided to a display unit when a user requests a search for a playback start position, and then a playback mode is automatically performed after searching for a wanted playback start position when the user selects a specific snapshot image, corresponding to the wanted playback start position, on the snapshot set screen, so that the wanted playback start position can be searched for conveniently and speedily to replay the broadcast signals from the wanted playback start position.

While the invention has been shown and described with respect to the preferred embodiments, it will be understood by those skilled in the art that various changes and modifications may be made without departing from the scope of the invention as defined in the following claims.

## Claims

1. An apparatus for replaying broadcast signals, which are recorded on a videotape, from a wanted playback start position selected by a user, included in a Video Cassette Recorder (VCR) system, comprising:
means for storing snapshot images, generated by extracting still images from the broadcast signals at predetermined intervals, when the broadcast signals are recorded on the videotape, and retrieving the stored snapshot images to construct a snapshot set screen by arranging the retrieved snapshot images in an NxN or an NxM matrix form and providing the snapshot set screen to a display unit, when a detection of the wanted playback start position is requested;
means for comparing playback signals generated by replaying the broadcast signals recorded on the videotape with a specific snapshot image, which is corresponding to the wanted playback start position, to thereby detect a section of the playback signals corresponding to the specific snapshot image, in case the specific snapshot image is selected among the snapshot images on the snapshot set screen which is provided to the display unit; and
means for replaying the broadcast signals recorded on the videotape from the detected section,
wherein the N and the M denote natural numbers.

2. The apparatus of claim 1, wherein the snapshot images are analog snapshot images that have passed through a Moving Picture Experts Group (MPEG) decoder and an encoder sequentially.

3. The apparatus of claim 1, wherein the snapshot images are digital snapshot images that have passed through an MPEG decoder.

4. An apparatus for replaying broadcast signals, which are recorded on a videotape, from a wanted playback start position selected by a user, included in a VCR system, comprising:
means for generating snapshot images by extracting still images from the broadcast signals at predetermined intervals when the broadcast signals are recorded on the videotape, and then for storing the snapshot images;
means for retrieving the stored snapshot images to construct a snapshot set screen by arranging the retrieved snapshot images in an N × N or an N × M matrix form and providing the snapshot set screen to a display unit, when a detection of the wanted playback start position is requested;
means for commanding a high-speed rewind mode or a high-speed playback mode of the broadcast signals recorded on the videotape to generate high-speed playback broadcast signals, in case the broadcast signals are required to be replayed from a specific snapshot image by selecting the specific snapshot image among the snapshot images on the snapshot set screen which is provided to the display unit;
means for comparing the high-speed playback broadcast signals with the specific snapshot image, to thereby detect a section of the high-speed playback broadcast signals corresponding to the specific snapshot image; and
means for replaying the broadcast signals recorded on the videotape from the detected section;
wherein the N and the M denote natural numbers.

5. A method of replaying broadcast signals, which are recorded on a videotape, from a wanted playback start position selected by a user, included in a VCR system, comprising the steps of:
storing snapshot images, generated by extracting still images from the broadcast signals at predetermined intervals, when the broadcast signals are recorded on the videotape;
retrieving the stored snapshot images to construct a snapshot set screen by arranging the retrieved snapshot images in an N × N or an N × M matrix form and providing the snapshot set screen to a display unit, when a detection of the wanted playback start position is required;
selecting a specific snapshot image, which is corresponding to the wanted playback start position among the snapshot images on the snapshot set screen which is provided to the display unit;
comparing playback signals generated by replaying the broadcast signals recorded on the videotape with the specific snapshot image, to thereby detect a section of the playback signals corresponding to the specific snapshot image; and
replaying the broadcast signals recorded on the videotape from the detected section;
wherein the N and the M denote natural numbers.

6. The method of claim 5, wherein the snapshot images are analog snapshot images that have passed through an MPEG decoder and an encoder sequentially.

7. The method of claim 5, wherein the snapshot images are digital snapshot images that have passed through an MPEG decoder.
